# EUROPÄISCHE PATENTSCHRIFT

(11) **EP 2 026 044 B1**
(45) Veröffentlichungstag und Bekanntmachung des Hinweises auf die Patenterteilung: **07.07.2010**
(21) Anmeldenummer: 07113872.1
(22) Anmeldetag: 06.08.2007
(51) Int. Cl.: G01F 11/02

(54) **Endstück für eine Dosiervorrichtung zum Dosieren eines Fluids**
End piece for a metering device for dosing a fluid
Extrémité pour un dispositif de dosage destiné au dosage d'un fluide

(43) Veröffentlichungstag der Anmeldung: 18.02.2009
(73) Patentinhaber: ViscoTec Pumpen-u. Dosiertechnik GmbH, 84513 Töging a. Inn (DE)
(72) Erfinder: Kelsch, Horst, 84513, Töging a. Inn (DE)
(74) Vertreter: Patentship

(56) Entgegenhaltungen:
- WO-A-96/36557
- DE-C1- 19 857 338
- DE-U1-202004 002 167
- US-A- 5 305 923

## Beschreibung

Die Erfindung betrifft ein Endstück für eine Dosiervorrichtung zum Dosieren eines Fluids.

Das technische Gebiet der Erfindung betrifft die Dosierung von Fluiden oder fluiden Medien, wie beispielsweise Kleb- oder Dichtstoffen, Farben, Suspensionen, viskosen Rohstoffen, Emulsionen oder Fetten. Dosiervorrichtungen, welche für eine solche Dosierung geeignet sind, können auf einer Zahnradpumpe oder einer Exzenterschneckenpumpe basieren oder beispielsweise als eine Spindelfördereinrichtung ausgebildet sein. Eine solche Dosiervorrichtung kann auch als Ventil, beispielsweise als Spindelventil, als Druck-Zeit-Ventil oder als Volumenventil ausgebildet sein.

Um kleine Mengen oder Kleinstmengen des Fluides zu dosieren, werden Dosiernadeln eingesetzt. Die einzusetzende Dosiernadel wird mit der jeweiligen Dosiervorrichtung gekoppelt. Für diese Koppelung ist der Anmelderin intern ein aufschraubbarer Adapter bekannt, welcher auf einen Endstutzen der Dosiervorrichtung aufgeschraubt wird. Der verschraubbare Adapter weist beispielsweise die Dosiernadel auf.

Nachteiligerweise kann aber bei der Verschraubung des Adapters mit der Dosiervorrichtung ein Totraum entstehen. Der entstandene Totraum kann die Wiederholbarkeit und/oder die Steuerbarkeit der Dosierung verschlechtern.

Des Weiteren ist ein solcher entstandener Totraum nachteilig, wenn das dosierte Fluid oder das dosierte fluide Medium zurückgesaugt werden soll, weil dann die Wahrscheinlichkeit für eine Blasenbildung im Kopplungsabschnitt zwischen dem Adapter und der Dosiervorrichtung deutlich erhöht ist.

Die Druckschrift DE 20 2004 002 167 U1, die als nächstkommende Stand der Technik angesehen wird, beschreibt ein Dosierventil zum Ausbringen kleinster Mediummengen auf ein Werkstück im Jetverfahren, mit einem Ventilkopf, der eine Austrittsöffnung sowie ein dieser zugeordnetes Ventilelement zum Öffnen und Verschließen der Austrittsöffnung besitzt, sowie einer dem Ventilkopf zugeordneten Jeteinrichtung, mit Hilfe derer das Medium in Form von Tröpfchen und/oder Strahlen aus dem Ventilkopf herausschieß- bzw. spritzbar ist, wobei auf dem Ventilkopf eine Dosiernadel sitzt, die nach Art einer Düse derart ausgebildet ist, dass das Medium in Form von Tröpfchen und/oder Strahlen aus der Dosiernadel herausschießbar ist.

Ferner zeigt die Druckschrift DE 198 57 338 C1 eine Dosiervorrichtung aufweisend eine Düsennadel, welche eine Bohrung in eine gedrosselt druckbeaufschlagbare Arbeitskammer und in eine druckbeaufschlagbare Fluidkammer unterteilt: Die Dosiervorrichtung hat mindestens eine Einspritzöffnung, welche mittels der Düsennadel verschließbar ist, einen in die Arbeitskammer mündenden Ablauf welcher mittels eines Dichtelementes verschließbar ist, wobei eine obere druckbelastete Fläche der Düsennadel größer ist als eine untere druckbelastete Fläche, wobei mittels des Stellantriebs das Dichtelement verschiebbar ist, so dass ein Öffnen und Schließen des Ablaufs steuerbar ist, wodurch ein Hub der Düsennadel so einstellbar ist, dass ein Öffnen und Schließen der Einspritzöffnung steuerbar ist.

Des Weiteren sind Dosiervorrichtungen aus der WO 96/36557 und aus der US 5,305,923 bekannt.

Demnach ist es eine Aufgabe der vorliegenden Erfindung, den Totraum bei der Kopplung der Dosiervorrichtung mit der Dosiernadel zu reduzieren oder zu minimieren.

Eine weitere Aufgabe ist es, eine möglichst einfache und/oder hinsichtlich des notwendigen Bauraums minimierte Lösung zur Detektion von Störungen beim Dosieren des Fluids durch die Dosiervorrichtung vorzuschlagen.

Zumindest eine dieser gestellten Aufgaben wird durch ein Endstück mit den Merkmalen des Patentanspruchs 1 gelöst.

Demgemäß wird ein Endstück für eine Dosiervorrichtung zum Dosieren eines Fluids vorgeschlagen, mit:
- einem ersten Kopplungsmittel, welches dazu geeignet ist, das Endstück mit der Dosiervorrichtung zu koppeln; und
- einem integrierten Nadeladapter, welcher dazu geeignet ist, eine Dosiernadel mit dem Endstück zu koppeln; und
- einer integrierten Drucksensorvorrichtung oder einem zweiten Kopplungsmittel, welches dazu geeignet ist, das Endstück mit einer Drucksensorvorrichtung zu koppeln.

Die Vorteile der vorliegenden Erfindung sind die Folgenden: Durch die einstückige Ausbildung des Endstückes oder Endstutzens und des Nadeladapters wird ein potenziell entstehender Totraum bei der Kopplung von Endstück und Nadeladapter vermieden. Somit ist die Wiederholbarkeit der Dosierung sowie die Steuerbarkeit der Dosierung deutlich verbessert. Des Weiteren ist eine Blasenbildung durch die Vermeidung des Totraums insbesondere beim Zurücksaugen von bereits dosiertem Fluid vermindert.

Ein weiterer Vorteil der vorliegenden Erfindung liegt darin, dass selbst dann, wenn eine Blasenbildung auftritt, diese mittels der integrierten Drucksensorvorrichtung oder mittels des zweiten Kopplungsmittels und der damit gekoppelten Drucksensorvorrichtung detektiert werden kann. Der Dosierdruck kann während der Dosierung des Fluids mittels der Drucksensorvorrichtung gemessen werden und in Abhängigkeit des gemessenen Dosierdruckes kann eine Störung, beispielsweise eine Luftblase im Fluid oder eine Schwankung des Dosierdruckes, detektiert werden.

Ein weiterer Vorteil liegt darin, dass der notwendige Bauraum durch die Integration des Nadeladapters in das Endstück minimiert ist, so dass auch die Reaktionszeiten beim Dosieren oder beim Dosiervorgang minimiert sind. Dies ist insbesondere von entscheidender Bedeutung bei der Dosierung von Kleinstmengen des Fluids oder des fluiden Mediums.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Weiterbildung der Erfindung ist das Endstück zweistückig ausgebildet ist. Ein erster Teil integriert das erste Kopplungsmittel und ein drittes Kopplungsmittel. Der zweite Teil integriert den integrierten Nadeladapter oder eine integrierte Düsennadel, die integrierte Drucksensorvorrichtung oder das zweite Kopplungsmittel und ein viertes Kopplungsmittel, welches mit dem dritten Kopplungsmittel koppelbar ist.

Gemäß einer bevorzugten Ausgestaltung der Erfindung sind das dritte Kopplungsmittel als ein Luer-Konus mit weiblichem Innenkegel und das vierte Kopplungsmittel als ein Luer-Konus mit männlichem Außenkegel ausgestaltet.

Gemäß einer bevorzugten Weiterbildung weist ein Kanal zur Förderung des von der Dosiervorrichtung geförderten Fluids in die Dosiernadel, welcher zumindest in dem Luer-Konus mit weiblichem Innenkegel angeordnet ist, eine Nut und einen in der Nut angeordneten O-Ring zum Abdichten des aus dem Luer-Konus mit weiblichem Innenkegel und dem Luer-Konus mit männlichem Außenkegel gebildeten Luer-Lock auf.

Gemäß einer weiteren bevorzugten Ausgestaltung bilden das dritte Kopplungsmittel und das vierte Kopplungsmittel eine Schraubverbindung aus.

Gemäß einer weiteren bevorzugten Ausgestaltung ist das Endstück einstückig ausgebildet.

Gemäß einer weiteren bevorzugten Weiterbildung ist eine Überwurfmutter vorgesehen, welche auf ein Außengewinde des Endstückes und auf ein Außengewinde der Dosiervorrichtung aufschraubbar ist.

Gemäß einer weiteren bevorzugten Ausgestaltung ist das Endstück dazu geeignet, einen Stator einer Exzenterschneckenpumpe der Dosiervorrichtung zu spannen.

Gemäß einer weiteren bevorzugten Ausgestaltung ist die Drucksensorvorrichtung dazu geeignet, einen durch die Dosiervorrichtung bereitgestellten Dosierdruck während einer Dosierung des Fluids zu steuern.

Gemäß einer weiteren bevorzugten Weiterbildung weist die Drucksensorvorrichtung auf:
einen Drucksensor, welcher einen Dosierdruck während einer Dosierung des Fluids misst; und
ein Detektionsmittel, welches dazu geeignet ist, in Abhängigkeit des gemessenen Dosierdruckes eine Störung, beispielsweise eine Luftblase im Fluid oder eine Schwankung des Dosierdruckes, zu detektieren.

Die Erfindung wird nachfolgend anhand der in den schematischen Figuren angegebenen Ausführungsbeispielen näher erläutert. Es zeigen:
- Fig. 1: eine schematische Längsschnittansicht des ersten Teils eines ersten Ausführungsbeispiels des erfindungsgemäßen Endstückes, welches mit einer Dosiervorrichtung gekoppelt ist;
- Fig. 2: eine schematische perspektivische Darstellung des ersten Ausführungsbeispiels des erfindungsgemäßen Endstückes;
- Fig. 3: eine schematische Längsschnittansicht des ersten Teils des erfindungsgemäßen Endstückes nach den Fig. 1 und 2;
- Fig. 4: eine schematische perspektivische Darstellung eines zweiten Ausführungsbeispiels des erfindungsgemäßen Endstückes;
- Fig. 5: eine schematische perspektivische Darstellung eines dritten Ausführungsbeispiels des erfindungsgemäßen Endstückes; und
- Fig. 6: eine schematische perspektivische Darstellung eines vierten Ausführungsbeispiels des erfindungsgemäßen Endstückes.

In allen Figuren sind gleiche bzw. funktionsgleiche Elemente und Einrichtungen - sofern nichts anderes angegeben ist - mit denselben Bezugszeichen versehen.

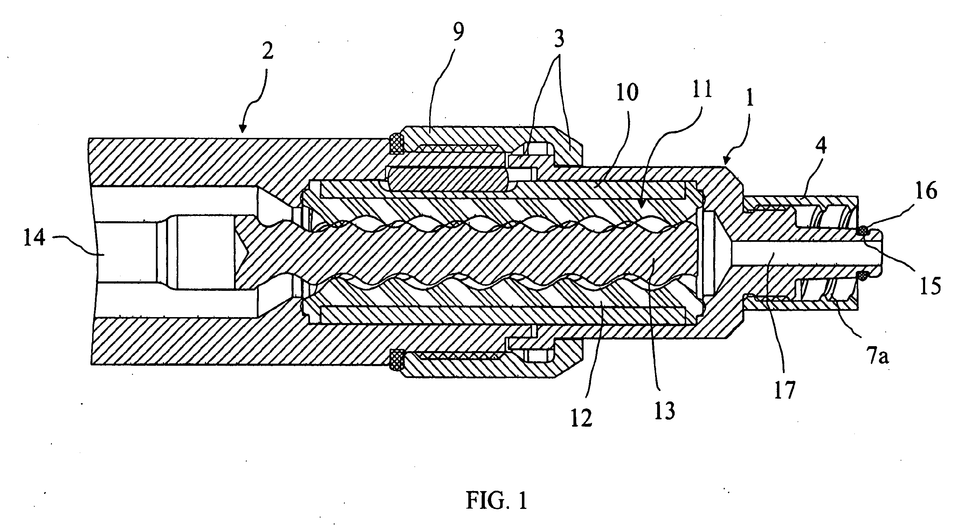

Fig. 1 zeigt eine schematische Längsschnittansicht eines ersten Teils 1a eines ersten Ausführungsbeispiels des erfindungsgemäßen Endstückes 1, welches mit einer Dosiervorrichtung 2 zum Dosieren eines Fluids gekoppelt ist.

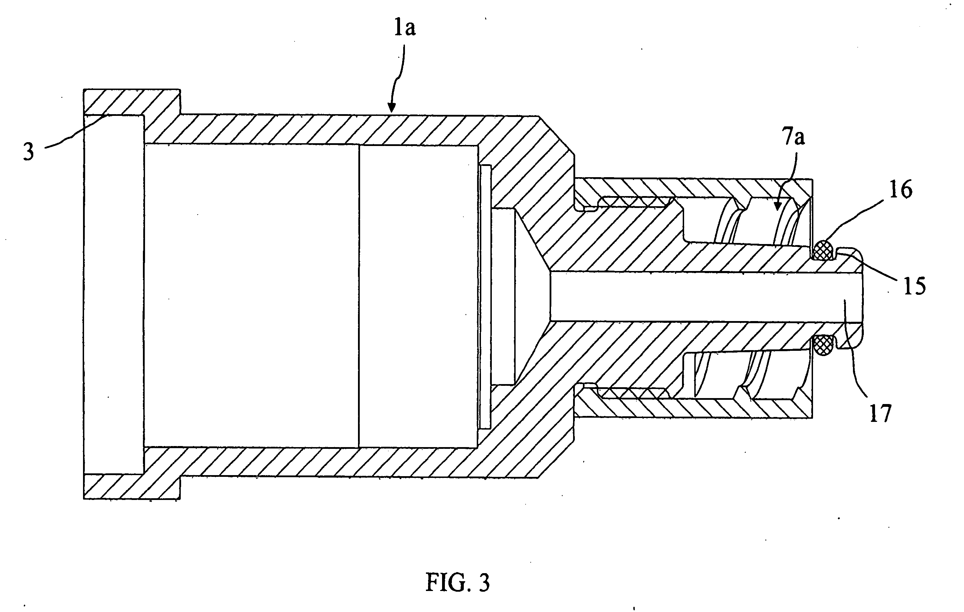

Sämtliche Ausführungsbeispiele der Erfindung gemäß der Fig. 1 bis 6 haben gemein, dass das Endstück 1 ein erstes Kopplungsmittel 3, welches dazu geeignet ist, das Endstück 1 mit der Dosiervorrichtung 2 zu koppeln, einen integrierten Nadeladapter 4, welcher dazu geeignet ist, eine Dosiernadel mit dem Endstück 1 zu koppeln, und eine integrierte Drucksensorvorrichtung 5 oder ein zweites Kopplungsmittel 6 aufweist, welches dazu geeignet ist, das Endstück 1 mit der Drucksensorvorrichtung 5 zu koppeln.

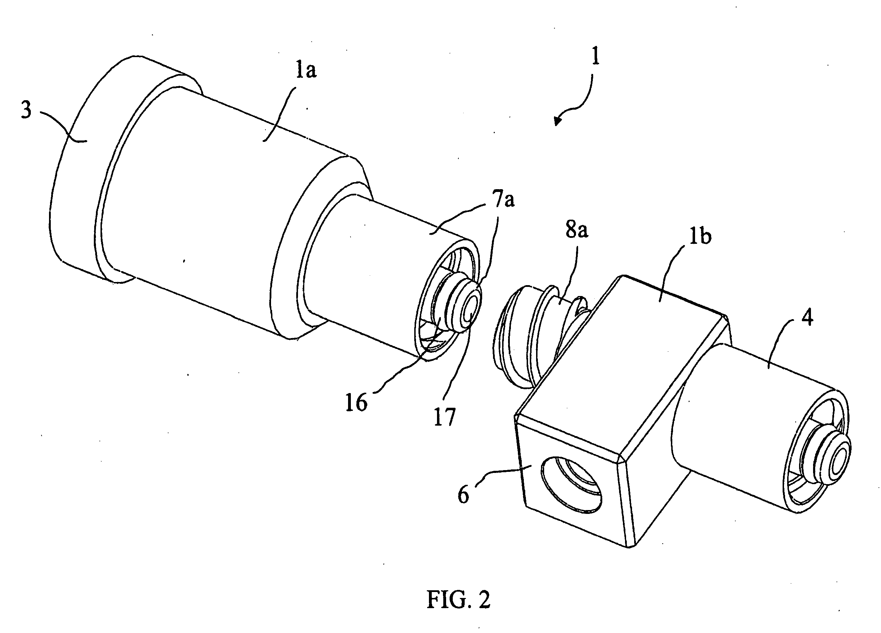

Gemäß dem ersten Ausführungsbeispiel gemäß der Fig. 1 bis 3 des Endstückes 1 ist das Endstück 1 zweistückig ausgebildet. Ein erster Teil 1a weist das erste Kopplungsmittel 3 und ein drittes Kopplungsmittel 7a auf. Der zweite Teil 1b (siehe Fig. 2) weist den integrierten Nadeladapter 4, das zweite Kopplungsmittel 6 und ein viertes Kopplungsmittel 8a auf, welches mit dem dritten Kopplungsmittel 7a koppelbar ist. Beispielsweise ist der integrierte Nadeladapter 4 als ein Luer-Lock-Adapter ausgebildet.

Gemäß dem ersten Ausführungsbeispiel nach den Fig. 1 bis 3 sind das dritte Kopplungsmittel 7a als ein Luer-Konus 7a mit weiblichem Innenkegel und das vierte Kopplungsmittel 8a als ein Luer-Konus 8a mit männlichem Außenkegel ausgestaltet.

Vorzugsweise ist ein Kanal 17 zur Durchführung des von der Dosiervorrichtung 2 geförderten Fluids in die Dosiernadel zumindest in dem Luer-Konus 7a mit weiblichem Innenkegel vorgesehen. Der Kanal 17 weist vorzugsweise an seinem Außendurchmesser eine Nut 15 und einen in der Nut 15 angeordneten O-Ring 16 zum Abdichten des aus dem Luer-Konus 7a mit weiblichem Innenkegel und aus dem Luer-Konus 7b mit männlichem Außenkegel gebildetem Luer-Lock 7a, 8a auf. Der O-Ring 16 ist beispielsweise aus einem Elastomer oder aus Gummi.

Vorzugsweise ist die Drucksensorvorrichtung 5, welche mit dem zweiten Kopplungsmittel 6 koppelbar ist, dazu geeignet, einen durch die Dosiervorrichtung 2 bereitgestellten Dosierdruck während einer Dosierung des Fluids zu messen und/oder zu steuern.

Vorzugsweise weist die Drucksensorvorrichtung 5 einen Drucksensor (nicht gezeigt) und/oder ein Detektionsmittel (nicht gezeigt) und/oder eine Steuervorrichtung (nicht gezeigt) auf.

Der Drucksensor ist insbesondere dazu geeignet, einen Dosierdruck während einer Dosierung des Fluids zu messen. Ferner ist das Detektionsmittel vorzugsweise dazu geeignet, in Abhängigkeit des gemessenen Dosierdruckes eine Störung, beispielsweise eine Luftblase im Fluid oder eine Schwankung des Dosierdruckes, zu detektieren.

Des Weiteren ist die Steuervorrichtung dazu geeignet, den Dosierdruck, welcher von der Dosiervorrichtung 2 bereitgestellt wird, in Abhängigkeit des von dem Drucksensor gemessenen Dosierdruckes zu steuern.

Weiter ist vorzugsweise eine Überwurfmutter 9 vorgesehen (siehe Fig. 1), welche auf ein Außengewinde des Endstückes 1 und auf ein Außengewinde der Dosiervorrichtung 2 zur verbesserten Verbindung des Endstückes 1 mit der Dosiervorrichtung 2 aufgeschraubt werden kann.

Ferner weist die Dosiervorrichtung 2 eine mit einem Motor (nicht gezeigt) gekoppelte Welle 14 auf. Die Welle 14 ist Teil einer Exzenterschneckenpumpe 11 und insbesondere dazu geeignet, einen Rotor 13 anzutreiben. Die Exzenterschneckenpumpe 11 kann zwischen dem Rotor 13 und dem Stator 10 ein Elastomerteil 12 aufweisen.

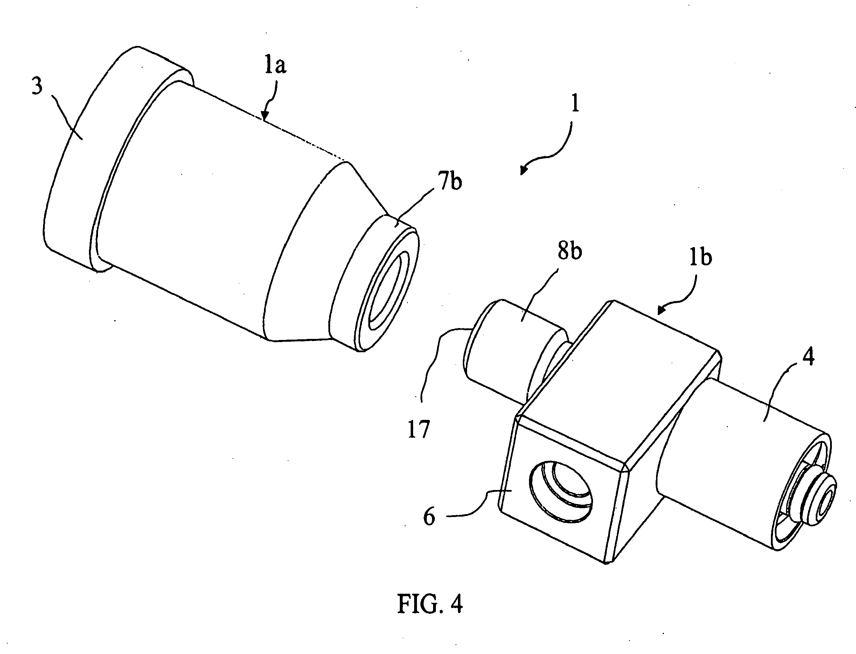

In Fig. 4 ist eine schematische perspektivische Darstellung eines zweiten Ausführungsbeispiels des erfindungsgemäßen Endstückes 1 dargestellt. Das zweite Ausführungsbeispiel gemäß Fig. 4 unterscheidet sich von dem ersten Ausführungsbeispiel gemäß Fig. 2 in der Ausgestaltung des dritten Kopplungsmittels 7b und des vierten Kopplungsmittels 8b. Gemäß dem zweiten Ausführungsbeispiel des Endstückes 1 bilden das dritte Kopplungsmittel 7b und das vierte Kopplungsmittel 8b eine Schraubverbindung 7b, 8b.

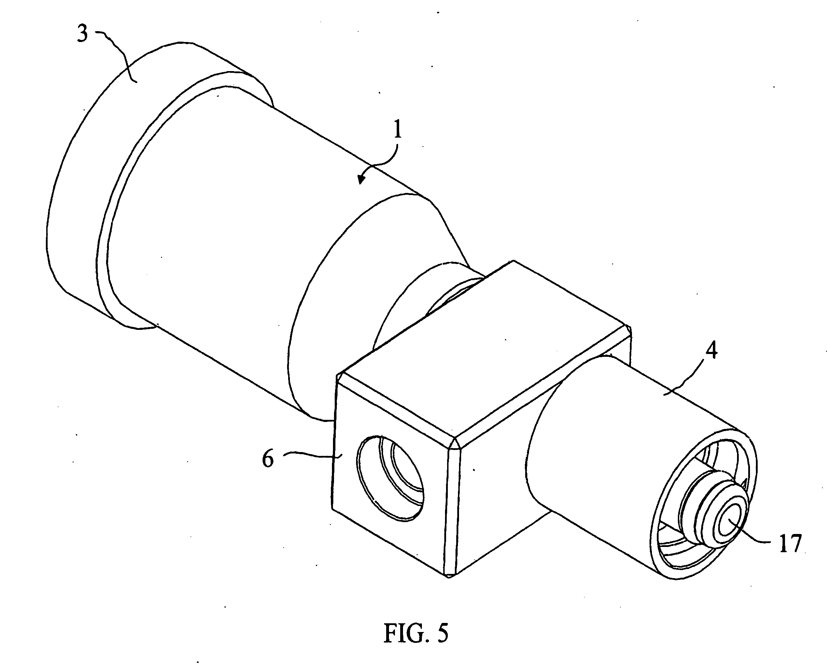

Fig. 5 zeigt eine schematische perspektivische Darstellung eines dritten Ausführungsbeispiels des erfindungsgemäßen Endstückes 1. Das erfindungsgemäße Endstück 1 gemäß dem dritten Ausführungsbeispiel nach Fig. 5 unterscheidet sich von den beiden ersten Ausführungsbeispielen des erfindungsgemäßen Endstückes 1 nach den Fig. 1 bis 4 insbesondere dahingehend, dass das Endstück 1 einstückig ausgebildet ist. Somit integriert das Endstück 1 gemäß Fig. 5 das erste Kopplungsmittel 3, den integrierten Nadeladapter 4 und das zweite Kopplungsmittel 6, welches dazu geeignet ist, das Endstück 1 mit der Drucksensorvorrichtung 5 zu koppeln. Alternativ kann der integrierte Nadeladapter 4 anstelle der Ausbildung als Luer-Lock auch als Schraub- oder Klemmverbindung ausgebildet sein.

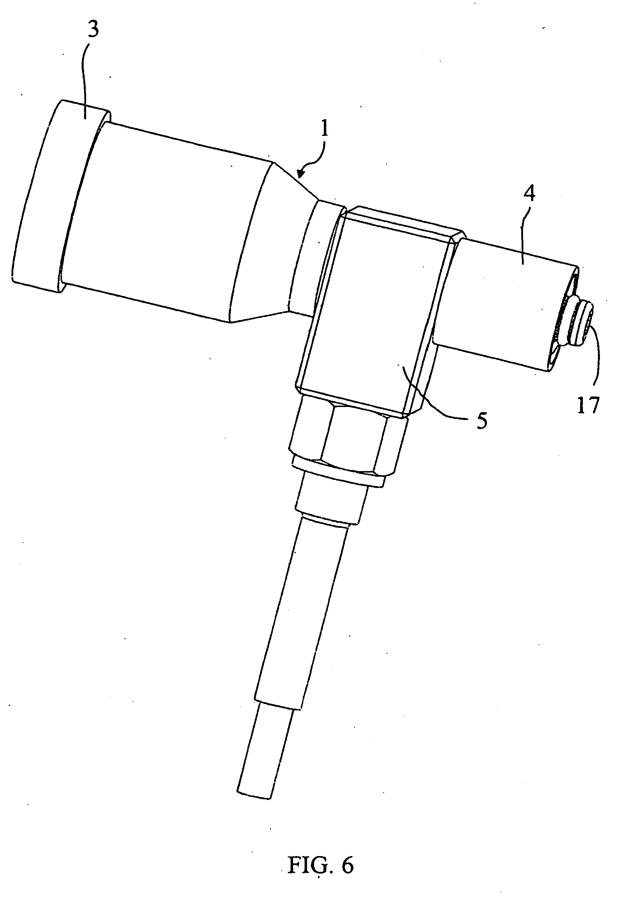

In Fig. 6 ist eine schematische perspektivische Darstellung eines vierten Ausführungsbeispiels des erfindungsgemäßen Endstückes 1 dargestellt. Das vierte Ausführungsbeispiel gemäß Fig. 6 unterscheidet sich von dem dritten Ausführungsbeispiel gemäß Fig. 5 dahingehend, dass nicht ein zweites Kopplungsmittel 6 zur Kopplung einer Drucksensorvorrichtung 5 vorgesehen ist, sondern dass die Drucksensorvorrichtung 5 in dem Endstück 1 integriert ist. Somit weist das Endstück 1 gemäß Fig. 6 neben dem ersten Kopplungsmittel 3, welches insbesondere als ein Steckverbinder auf einem Außendurchmesser der Drucksensorvorrichtung 2 ausgebildet sein kann, einen integrierten Nadeladapter 4 zur Kopplung der Dosiernadel und eine integrierte Drucksensorvorrichtung 5 auf.

Beispiele für das Fluid oder das fluide Medium sind Kleb- und Dichtstoffe, wie Silicone, Zwei-Komponenten-Kleber, Verguss-und Dichtmassen, Lötpasten, RTV-Silicone, anaerobe Klebstoffe, Cyanacrylate, Epoxidharze und Polyurethane. Ein weiteres Beispiel für ein Fluid kann eine Farbe, wie eine UV-Farbe, ein Lack, eine Farbpaste, eine Offset-Farbe oder ein Additiv sein. Weitere geeignete Beispiele für das zu dosierende Fluid sind Suspensionen, viskose Rohstoffe, Emulsionen und Fette. Als Dosiervorrichtung sind Dosiervorrichtungen auf der Basis einer Zahnradpumpe oder einer Exzenterschneckenpumpe geeignet. Ferner kann die Dosiervorrichtung auch als ein Ventil, beispielsweise als Spindelventil oder Volumenventile ausgebildet sein. Des Weiteren kann die Dosiervorrichtung als Spindelfördereinrichtung oder Spritze ausgebildet sein.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

### Bezugszeichenliste

- 1: Endstück
- 1a: erster Teil des Endstückes
- 1b: zweiter Teil des Endstückes
- 2: Dosiervorrichtung
- 3: erstes Kopplungsmittel
- 4: Nadeladapter
- 5: Drucksensorvorrichtung
- 6: zweites Kopplungsmittel
- 7a, 7b: drittes Kopplungsmittel
- 8a, 8b: viertes Kopplungsmittel
- 9: Überwurfmutter
- 10: Stator
- 11: Extenterschneckenpumpe
- 12: Elastomerteil
- 13: Rotor
- 14: Welle
- 15: Nut
- 16: O-Ring
- 17: Kanal

## Patentansprüche

1. Endstück (1) für eine Dosiervorrichtung (2) zum Dosieren eines Fluids, mit:
einem ersten Kopplungsmittel (3), welches dazu geeignet ist, das Endstück (1) mit der Dosiervorrichtung (2) zu koppeln; **gekennzeichnet durch**
einem integrierten Nadeladapter (4), welcher dazu geeignet ist, eine Dosiernadel mit dem Endstück (1) zu koppeln; und
eine integrierte Drucksensorvorrichtung (5) oder ein zweites Kopplungsmittel (6), welches dazu geeignet ist, das Endstück (1) mit einer Drucksensorvorrichtung (5) zu koppeln.

2. Endstück nach Anspruch 1,
**dadurch gekennzeichnet,**
**dass** das Endstück (1) zweistückig ausgebildet ist, wobei ein erster Teil (1a) das erste Kopplungsmittel (3) und ein drittes Kopplungsmittel (7a, 7b) und der zweite Teil (1b) den integrierten Nadeladapter (4) oder eine integrierte Düsennadel, die integrierte Drucksensorvorrichtung (5) oder das zweite Kopplungsmittel (6) und ein viertes Kopplungsmittel (8a, 8b) aufweist, welches mit dem dritten Kopplungsmittel (7a, 7b) koppelbar ist.

3. Endstück nach Anspruch 2,
**dadurch gekennzeichnet,**
**dass** das dritte Kopplungsmittel (7a, 7b) als ein Luer-Konus (7a) mit weiblichem Innenkegel und das vierte Kopplungsmittel (8a, 8b) als ein Luer-Konus (8a) mit männlichem Außenkegel ausgestaltet sind.

4. Endstück nach Anspruch 3,
**dadurch gekennzeichnet,**
**dass** ein Kanal (17) zur Förderung des von der Dosiervorrichtung (2) geförderten Fluids in die Dosiernadel zumindest in dem Luer-Konus (7a) mit weiblichem Innenkegel eine Nut (15) und einen in der Nut (15) angeordneten O-Ring (16) zum Abdichten des aus dem Luer-Konus (7a) mit weiblichem Innenkegel und dem Luer-Konus (7b) mit männlichem Außenkegel gebildeten Luer-Lock (7a, 8a) aufweist.

5. Endstück nach Anspruch 2,
**dadurch gekennzeichnet,**
**dass** das dritte Kopplungsmittel (7a, 7b) und das vierte Kopplungsmittel (8a, 8b) eine Schraubverbindung (7b, 8b) ausbildet.

6. Endstück nach Anspruch 1,
**dadurch gekennzeichnet,**
**dass** das Endstück (1) einstückig ausgebildet ist.

7. Endstück nach Anspruch 1 oder einem der Ansprüche 2 bis 6,
**dadurch gekennzeichnet,**
**dass** eine Überwurfmutter (9) vorgesehen ist, welche auf ein Außengewinde des Endstückes (1) und auf ein Außengewinde der Dosiervorrichtung (2) aufschraubbar ist.

8. Endstück nach Anspruch 1 oder einem der Ansprüche 2 bis 7,
**dadurch gekennzeichnet,**
**dass** das Endstück (1) dazu geeignet ist, einen Stator (10) einer Exzenterschneckenpumpe (11) der Dosiervorrichtung (2) zu spannen.

9. Endstück nach Anspruch 1 oder einem der Ansprüche 2 bis 8,
**dadurch gekennzeichnet,**
**dass** die Drucksensorvorrichtung (5) dazu geeignet ist, einen durch die Dosiervorrichtung (2) bereitgestellten Dosierdruck während einer Dosierung des Fluids zu steuern.

10. Endstück nach Anspruch 1 oder einem der Ansprüche 2 bis 9,
**dadurch gekennzeichnet,**
**dass** die Drucksensorvorrichtung (5) aufweist:
- einen Drucksensor, welcher einen Dosierdruck während einer Dosierung des Fluids misst; und
- ein Detektionsmittel, welches dazu geeignet ist, in Abhängigkeit des gemessenen Dosierdruckes eine Störung, beispielsweise eine Luftblase im Fluid oder eine Schwankung des Dosierdruckes, zu detektieren.

## Claims

1. End piece (1) for a metering device (2) for metering a fluid, having:
- a first coupling means (3) which is suitable for coupling the end piece (1) with the metering device (2);
**characterised by**
- an integrated needle adapter (4) which is suitable for coupling a metering needle with the end piece (1); and
- an integrated pressure sensor device (5) or a second coupling means (6) which is suitable for coupling the end piece (1) with a pressure sensor device (5).

2. End piece as claimed in claim 1, **characterised in that** the end piece (1) is formed in two pieces, wherein a first part (1a) comprises the first coupling means (3) and a third coupling means (7a, 7b), and the second part (1b) comprises the integrated needle adapter (4) or an integrated nozzle needle, the integrated pressure sensor device (5) or the second coupling means (6) and a fourth coupling means (8a, 8b) which can be coupled with the third coupling means (7a, 7b).

3. End piece as claimed in claim 2, **characterised in that** the third coupling means (7a, 7b) is formed as a Luer cone (7a) having a female internal cone and the fourth coupling means (8a, 8b) is formed as a Luer cone (8a) having a male external cone.

4. End piece as claimed in claim 3, **characterised in that** a channel (17) for conveying the fluid delivered by the metering device (2) into the metering needle at least in the Luer cone (7a) having a female internal cone comprises a groove (15) and an O-ring (16) disposed in the groove (15) for sealing the Luer lock (7a, 8a) formed by the Luer cone (7a) having a female internal cone and the Luer cone (7b) having a male external cone.

5. End piece as claimed in claim 2, **characterised in that** the third coupling means (7a, 7b) and the fourth coupling means (8a, 8b) form a screw connection (7b, 8b).

6. End piece as claimed in claim 1, **characterised in that** the end piece (1) is formed as one piece.

7. End piece as claimed in claim 1 or any one of claims 2 to 6, **characterised in that** a coupling nut (9) is provided which can be screwed onto an external thread of the end piece (1) and onto an external thread of the metering device (2).

8. End piece as claimed in claim 1 or any one of claims 2 to 7, **characterised in that** the end piece (1) is suitable for tensioning a stator (10) of an eccentric screw pump (11) of the metering device (2).

9. End piece as claimed in claim 1 or any one of claims 2 to 8, **characterised in that** the pressure sensor device (5) is suitable for controlling a metering pressure, provided by the metering device (2), as the fluid is being metered.

10. End piece as claimed in claim 1 or any one of claims 2 to 9, **characterised in that** the pressure sensor device (5) comprises:
- a pressure sensor which measures a metering pressure as the fluid is being metered; and
- a detection means which is suitable for detecting, in dependence upon the measured metering pressure, a disruption, for example an air bubble in the fluid or a fluctuation in the metering pressure.

## Revendications

1. Embout (1) pour un dispositif de dosage (2) permettant de doser un fluide, comprenant :
- un premier élément d'accouplement (3), qui sert à accoupler l'embout (1) au dispositif de dosage (2) ;
**caractérisé par**
- un adaptateur d' aiguille intégré (4), qui sert à accoupler une aiguille de dosage à l'embout (1) ; et
- un dispositif à capteur de pression intégré (5) ou un second élément d'accouplement (6), qui sert à accoupler l'embout (1) à un dispositif à capteur de pression (5).

2. Embout selon la revendication 1, **caractérisé en ce que** l'embout (1) est constitué de deux parties, une première partie (1a) présentant le premier élément d'accouplement (3) et un troisième élément d'accouplement (7a, 7b) et la deuxième partie (1b) présentant l'adaptateur d'aiguille intégré (4) ou une aiguille d'injection intégrée, le dispositif à capteur de pression intégré (5) ou le second élément d'accouplement (6) et un quatrième élément d'accouplement (8a, 8b) qui peut être accouplé au troisième élément d'accouplement (7a, 7b).

3. Embout selon la revendication 2, **caractérisé en ce que** le troisième élément d'accouplement (7a, 7b) est réalisé sous forme de cône Luer (7a) à cône interne femelle et le quatrième élément d'accouplement (8a, 8b) est réalisé sous forme de cône Luer (8a) à cône externe mâle.

4. Embout selon la revendication 3, **caractérisé en ce qu'**un canal (17) permettant d'acheminer le fluide véhiculé par le dispositif de dosage (2) dans l'aiguille de dosage présente, au moins dans le cône Luer (7a) à cône interne femelle, une rainure (15) et un joint torique (16) disposé dans la rainure (15) afin d'assurer l'étanchéité du système de verrouillage Luer (7a, 8a) formé par le cône Luer (7a) à cône interne femelle et le cône Luer (7b) à cône externe mâle.

5. Embout selon la revendication 2, **caractérisé en ce que** le troisième élément d'accouplement (7a, 7b) et le quatrième élément d'accouplement (8a, 8b) forment un assemblage vissé (7b, 8b).

6. Embout selon la revendication 1, **caractérisé en ce que** l'embout (1) est constitué d'un seul tenant.

7. Embout selon la revendication 1 ou l'une des revendications 2 à 6, **caractérisé en ce qu'**il est prévu un écrou-raccord (9) qui peut être vissé sur un filetage extérieur de l'embout (1) et sur un filetage extérieur du dispositif de dosage (2).

8. Embout selon la revendication 1 ou l'une des revendications 2 à 7, **caractérisé en ce que** l'embout (1) permet de serrer un stator (10) d'une pompe à vis sans fin excentrique (11) du dispositif de dosage (2).

9. Embout selon la revendication 1 ou l'une des revendications 2 à 8, **caractérisé en ce que** le dispositif à capteur de pression (5) sert à commander une pression de dosage fournie par le dispositif de dosage (2) pendant un dosage du fluide.

10. Embout selon la revendication 1 ou l'une des revendications 2 à 9, **caractérisé en ce que** le dispositif à capteur de pression (5) présente :
- un capteur de pression, qui mesure une pression de dosage pendant un dosage du fluide ; et
- un élément de détection, qui sert à détecter, en fonction de la pression de dosage mesurée, une défaillance, par exemple une bulle d'air dans le fluide ou une fluctuation de la pression de dosage.
